# EUROPEAN PATENT APPLICATION

(11) **EP 4 447 287 A1**
(43) Date of publication of application: **16.10.2024**
(21) Application number: 24167763.2
(22) Date of filing: 28.03.2024
(51) Int. Cl.: H02K 5/20

(54) **MOTOR WITH ENHANCED STATOR COOLING**

(30) Priority: 05.04.2023 US 202318295895
(71) Applicant: Hamilton Sundstrand Corporation, Charlotte, NC 28217-4578 (US)
(72) Inventor: CAMPBELL, Kris H., Poplar Grove, IL (US); DANCKERS, Erika, Rockford, IL (US); KOENIG, Andreas C., Rockford, IL (US); JOSHI, Ashutosh, Roscoe, IL (US)
(74) Representative: Dehns

(57) **Abstract**

An electromagnetic machine including a stator (30) and a heat transfer component (40) thermally coupled to the stator (30). The heat transfer component (40) has at least one inlet (52), at least one outlet (54), and one or more channels (44) fluidly connecting the at least one inlet (52) to the at least one outlet (54). The one or more channels (44) have a helical configuration.

## Description

### BACKGROUND

Exemplary embodiments disclosed herein relate to a cooling arrangement for a high-power electric machine, such as a motor or generator used in aerospace applications.

Aircraft powered by gas turbine engines often include a mechanically driven accessory gearbox which connects to accessory systems such as an electrical starter-generator or electric generator. High power density aircraft generators utilize an internal oil management system. The internal oil management system provides supplemental cooling to the generator main stator through a back iron oil flow. The back iron oil flow is additionally used to cool the stator end turns. However, the flow provided thereto is not controlled and the oil ultimately floods the rotor-stator air gap. The wet cavity creates by this flooding causing significant windage loss, which in turn reduces the operational efficiency of the machine.

### BRIEF DESCRIPTION

According to an embodiment, an electromagnetic machine including a stator and a heat transfer component thermally coupled to the stator. The heat transfer component has at least one inlet, at least one outlet, and one or more channels fluidly connecting the at least one inlet to the at least one outlet. The one or more channels have a helical configuration.

In addition to one or more of the features described above, or as an alternative, in further embodiments the one or more channels includes a first channel and a second channel, the first channel being positioned directly adjacent to the second channel.

In addition to one or more of the features described above, or as an alternative, in further embodiments both the first channel and the second channel wrap about the periphery of the heat transfer component together.

In addition to one or more of the features described above, or as an alternative, in further embodiments the at least one outlet includes a plurality of outlets. The one or more channels includes a plurality of channels fluidly connecting the at least one inlet to the plurality of outlets.

In addition to one or more of the features described above, or as an alternative, in further embodiments a first channel of the plurality of channels extends axially from the at least one inlet to a first outlet of the plurality of outlets in a first direction and a second channel of the plurality of channels extends axially from the at least one inlet to a second outlet of the plurality of outlets in a second direction.

In addition to one or more of the features described above, or as an alternative, in further embodiments the first channel is wrapped about a periphery of the heat transfer component in a first wrap direction and the second channel is wrapped about a periphery of the heat transfer component in a second, opposite wrap direction.

In addition to one or more of the features described above, or as an alternative, in further embodiments a first channel and a second channel of the plurality of channels extend axially from the at least one inlet to a first outlet of the plurality of outlets in a first direction and a third channel and a fourth channel of the plurality of channels extend axially from the at least one inlet to a second outlet of the plurality of outlets in a second direction.

In addition to one or more of the features described above, or as an alternative, in further embodiments the at least one inlet and the at least one outlet are axially offset.

In addition to one or more of the features described above, or as an alternative, in further embodiments at least one inlet further includes a plurality of inlets including a first inlet arranged near a first end of the heat transfer component, a second inlet arranged near a center of the heat transfer component, and a third inlet arranged near a second, opposite end of the heat transfer component.

In addition to one or more of the features described above, or as an alternative, in further embodiments the at least one outlet further comprises a plurality of outlets including a first outlet and a second outlet.

In addition to one or more of the features described above, or as an alternative, in further embodiments the one or more channels includes a plurality of channels, the first outlet is fluidly connected to the first inlet by at least one of the plurality of channels, the first outlet is fluidly connected to the second inlet by at least one of the plurality of channels, the second outlet is fluidly connected to the second inlet by at least one channel of the plurality of channels, and the second outlet is fluidly connected to the third inlet by at least one channel of the plurality of channels.

In addition to one or more of the features described above, or as an alternative, in further embodiments the one or more channels is formed as a groove in a surface of the heat transfer component.

In addition to one or more of the features described above, or as an alternative, in further embodiments the heat transfer component further includes a base and a plurality of fins, the one or more channels being defined by the plurality of fins.

In addition to one or more of the features described above, or as an alternative, in further embodiments including a housing. An interior surface of the housing cooperates with the heat transfer component to bound the one or more channels.

In addition to one or more of the features described above, or as an alternative, in further embodiments the heat transfer component is formed from an aluminum material or alloy.

According to an embodiment, a method of cooling a stator includes providing a heat transfer component thermally coupled to the stator. The heat transfer component has at least one inlet, at least one outlet, and one or more channels fluidly connecting the at least one inlet to the at least one outlet. The one or more channels having a helical configuration. The method additionally includes providing a cooling fluid to the at least one inlet and removing heat from the stator via the cooling fluid.

In addition to one or more of the features described above, or as an alternative, in further embodiments the at least one inlet further includes a plurality of inlets, the cooling fluid is provided to the plurality of inlets simultaneously.

In addition to one or more of the features described above, or as an alternative, in further embodiments the one or more channels further includes a plurality of channels and the cooling fluid is configured to flow through at least one of the plurality of channels in a first axial direction and the cooling fluid is configured to flow through at least one of the plurality of channels in a second axial direction.

In addition to one or more of the features described above, or as an alternative, in further embodiments the cooling fluid is configured to flow about a periphery of the heat transfer component in a first wrap direction and the cooling fluid is configured to flow about the periphery of the heat transfer component in a second wrap direction.

### BRIEF DESCRIPTION OF THE DRAWINGS

The following descriptions should not be considered limiting in any way. With reference to the accompanying drawings, like elements are numbered alike:
FIG. 1 is a cross-sectional view of a fluid-cooled electromagnetic machine according to an embodiment;
FIG. 2 is a schematic cross-section of a portion of the electromagnetic machine according to an embodiment;
FIG. 3 is a side view of a heat transfer component of the electromagnetic machine according to an embodiment; and

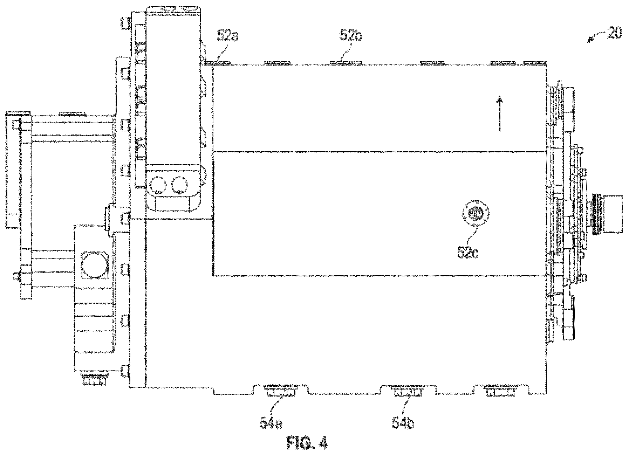

FIG. 4 is a side view of the housing of the electromagnetic machine according to an embodiment.

### DETAILED DESCRIPTION

A detailed description of one or more embodiments of the disclosed apparatus are presented herein by way of exemplification and not limitation with reference to the Figures.

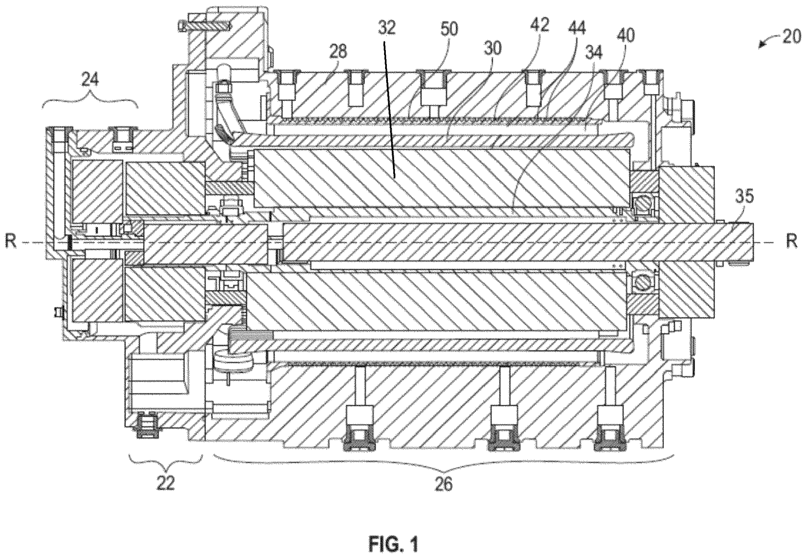

With reference now to FIG. 1, an example of a fluid-cooled electromagnetic machine 20, such as a generator, which may be used with a prime mover, such as a gas turbine engine for example, is illustrated. In the illustrated, non-limiting embodiment of FIG. 1, the electromagnetic machine 20 includes exciter, permanent magnet generator (PMG) and generator sections 22, 24, 26. Each of the sections 22, 24, 26 is arranged within a housing 28, which may be provided by multiple housing sections secured to one another to facilitate assembly and maintenance of the electromagnetic machine 20. The exciter section 22 includes an exciter stator and an exciter rotor (not shown); the PMG section 24 includes a PMG stator and a PMG rotor (not shown); and the generator section 26 includes a stator 30 and a rotor 32 mounted on a rotor shaft 34 which is rotationally coupled to an input shaft 35. However, in other embodiments, the rotor shaft 34 and the input shaft 35 may be integrated into a single rotatable component.

As shown, the input shaft 35 extends axially along axis of rotation R, which is at a radial center of electromagnetic machine 20. The input shaft 35 maybe a cylinder with a consistent or varying radius, can be solid or hollow, or may be formed from multiple pieces fastened together, depending on design considerations. Further, input shaft 35 can be made from a variety of materials, including steel, aluminum material or alloy, or other materials able to handle high stresses without deformation and/or failure. When used as a motor, energy can be outputted from electromagnetic machine 20 through the rotation of input shaft 35, to drive exterior devices. Alternatively, when used as a generator, rotational energy can be inputted into the electromagnetic machine 20 by driving the input shaft 35 about its axis R which, in turn, induces voltage in the stator 30. The induced voltage can be outputted to supply electricity to exterior devices.

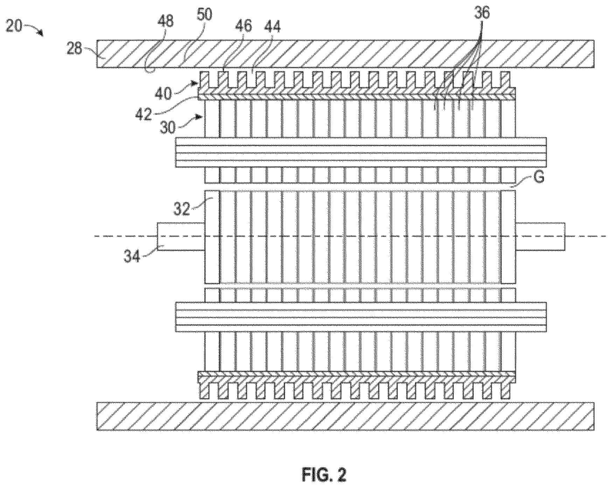

In the illustrated, non-limiting embodiment, the rotor 32 is fixedly coupled to and extends radially outward from rotor shaft 34. The stator 30 is arranged parallel to the axis of rotation R and is located radially outwardly from the rotor 32. The stator 30 is physically separated from rotor 32 such that a gap G (see FIG. 2) is present between an outermost surface of the rotor 32 and an innermost surface of the stator 30. The stator 30 is stationary relative to rotor shaft 34 and rotor 32. Accordingly, the rotor shaft 34 and rotor 32 rotate in unison, within the interior of the stator 30, to induce a voltage in either the windings of the stator or the windings of rotor 32. Like rotor 32, the stator 30 may include a plurality of stator laminations 36 (FIG. 2) arranged in a stacked configuration and fastened together. The lamination stack of the stator 30 can be formed from a variety of materials, such as steel or another material, and the sheets can be fastened together through adhesive, resin, or another means, as welding.

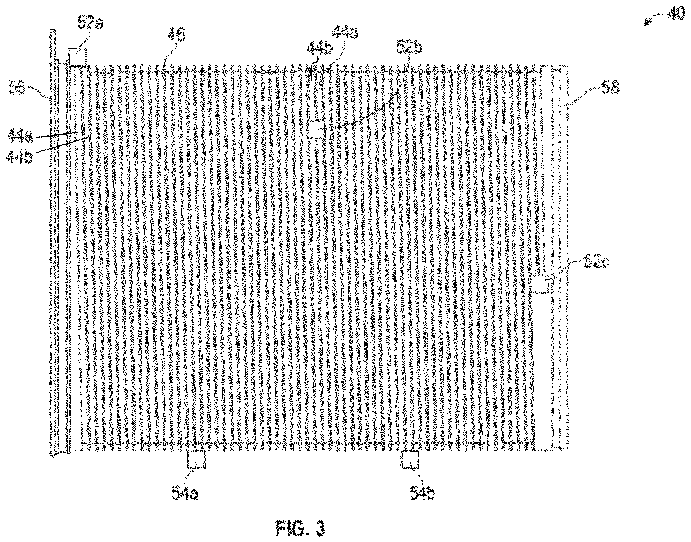

With continued reference to FIGS. 1 and 2 and further reference to FIG. 3, in an embodiment, a heat transfer component 40 is mounted to the stator 30. The heat transfer component may be formed from any suitable material, such as based on thermal conductivity. Examples of suitable materials include but are not limited to metals such as steel, titanium, and aluminum. In the illustrated, non-limiting embodiment, the heat transfer component 40 has a cylindrical or annular shaped body. An inner diameter of the heat transfer component 40 may be substantially equal to an outer diameter of the stator 30 such that the heat transfer component 40 is positionable about the stator 30. In such an embodiment, the heat transfer component 40 may be configured as a sleeve and the stator 30 may be press fit or slidably received within an interior of the heat transfer component 40.

The heat transfer component 40 when mounted to stator 30 is thermally coupled thereto. With continued reference to FIG. 3, in an embodiment, the heat transfer component 40 includes a base 42 and at least one channel 44 extending about a periphery of the base 42. As shown in the non-limiting embodiment of FIG. 3, the at least one channel 44 may be formed as a groove in a surface 46 of the base 42. In such embodiments, the outer surface 46 of the heat transfer component 40 may abut the interior surface 48 of the housing 28 (see FIG. 2) such that the housing 28 cooperates with the heat transfer component 40 to bound the at least one channel 44. Alternatively, as shown in FIG. 2, the heat transfer component 40 may include one or more fins 50 extending radially outwardly from the base 42 such that the at least one channel 44 is defined between adjacent fins 50 or fin surfaces. In such embodiments the fins 50 may abut the interior surface 48 of the housing 28. However, it should be appreciated that in some embodiments a minimal gap or clearance may exist between at least a portion of the heat transfer component 40 and the interior surface 48 of the housing 28 to allow separation of the housing and the heat transfer component 40.

With reference to FIG. 3, the at least one channel 44 extends between and fluidly couples an inlet 52 and at least one outlet 54. It should be appreciated that the heat transfer component 40 may have a plurality of inlets 52 and/or a plurality of outlets 54 formed therein and that each of the inlets 52 is fluidly coupled to one or more outlets 54 by one or more channels 44. However, the number of inlets 52 located at the heat transfer component 40 may but need not equal the number of outlets 54. For example, in the illustrated, non-limiting embodiment, the heat transfer component 40 includes three inlets 52 (52a, 52b, 52c) and two outlets 54 (54a, 54b). However, any suitable number of inlets and outlets is contemplated herein. In embodiments including multiple inlets 52, the inlets 52 may be equidistantly spaced over the axial length of the heat transfer component 40. In the illustrated, non-limiting embodiment, a first inlet 52a is arranged adjacent to a first end 56 of the heat transfer component 40, a second inlet 52b is arranged at a center of the heat transfer component 40 and a third inlet 52c is arranged adjacent to a second, opposite end 58 of the heat transfer component 40. However, the plurality of inlets may be non-uniformly spaced about the body of the heat transfer component 40.

Similarly, in embodiments where an outlet 54 is fluidly coupled to multiple inlets 52, the outlet 54 is located along an axis between the plurality of inlets 52 to which the outlet 54 is coupled. For example, a first outlet 54a may be located between and fluidly coupled to the first inlet 52a and/or the second inlet 52b and a second outlet 54b may be positioned between and fluidly coupled to the second inlet 52b and the third inlet 52c. In such a configuration, the outlet 54 may be centered between the inlets 52 or may be skewed closer to one inlet or the other. Further, in embodiments including a plurality of inlets 52, some or all of the inlets 52 may be located at the same radial location, or alternatively, at different radial locations about the periphery of the heat transfer component 40 (see FIG. 3). Similarly, in embodiments including a plurality of outlets 54, the outlets 54 may be located at the same radial location (see FIG. 3), or alternatively, at different radial locations about a periphery of the heat transfer component 40. It should be appreciated that the at least one inlet 52 may but need not be radially aligned with the at least one outlet 54.

In an embodiment, the at least one channel 44 is configured to continuously wrap about an outer periphery of the heat transfer component 40 while moving axially between a respective inlet 52 and a respective outlet 54. Accordingly, the at least one channel 44 may have a spiral-like or helical configuration. In an embodiment, the at least one channel 44 wraps at least 360 degrees about the periphery of the heat transfer component 40 between the inlet 52 and the outlet 54. In other embodiments, the at least one channel 44 completes several 360 degree wraps about the periphery of the heat transfer component 40 between the inlet and the outlet. It should be appreciated that the total number of wraps of the at least one channel 44 about the periphery of the heat transfer component 40 may vary based on the axial distance between the inlet 52 and the outlet 54. Further, it should be appreciated that the at least one channel may wrap about the periphery in either a first wrap direction and/or a second wrap direction.

In an embodiment, the at least one channel 44 connecting an inlet 52 and at least one outlet 54 includes a plurality of channels. Although two channels 44a, 44b are shown in the illustrated, non-limiting embodiment, it should be understood that a configuration where a single channel, or alternatively, more than two channels, such as three channels, four channels, five channels, or more than five channels for example are also within the scope of the disclosure. In embodiments including a plurality of inlets 52, the number of channels 44 fluidly connected to each inlet 52 may be the same or may be different. It should be appreciated that the number of channels 44 connected to each inlet 52 may vary based on the location of the channels 44 relative to the stator 30 and the localized heat to be removed thereby.

In embodiments including a plurality of channels fluidly connected to a single inlet 52, the plurality of channels, such as a first channel 44a and a second channel 44b for example, may be positioned directly adjacent to one another such that a wall or fin 50 is generally shared between the first channel 44a and the second channel 44b. In such a configuration, some or all of the plurality of channels, such as channels 44a, 44b shown in the FIGS., may wrap about the periphery of the heat transfer component 40 in unison or parallel to one another. In another embodiment a plurality of channels 44a, 44b may fluidly connect an inlet to a plurality of different outlets, such as a first outlet 54a and a second outlet 54b for example. In such embodiments, the inlet 52b may be located between the two outlets 54a, 54b such that at least one channel 44 extends from the inlet 52b in a first axial direction and at least one channel 44 extends from the inlet 52b in a second, opposite axial direction. In an embodiment, a first channel and a second channel extend from the inlet 52b in a first axial direction to the first outlet 54a and a third channel and a fourth channel extend from the inlet 52b in a second axial direction to the second outlet 54b. The first and second channel may wrap about a periphery of the heat transfer component 40 in a first direction and the third and fourth cannel may wrap about the periphery of the heat transfer component in a second, opposite direction.

During operation of the electromagnetic machine 20, a cooling fluid, such as a flow of oil for example, is provided to the at least one inlet 52 formed in the housing 28. In embodiments including a plurality of inlets 52a-52c, the cooling fluid may be provided to each of the inlets 52a-52c simultaneously. From each inlet 52, the cooling fluid is communicated to one or more channels 44, such as two channels 44a, 44b. Within the channels, the cooling fluid flows not only about a periphery of the heat transfer component, but also along the axis of the heat transfer component, toward the outlet. As the cooling fluid moves through the flow path defined by the channel, heat is configured to transfer from the stator 30, to the heat transfer component 40 and to the cooling fluid. Upon reaching an outlet 54, the cooling fluid may be communicated to a cooling fluid conduit (not shown) formed in the housing 28. In an embodiment, a pump may be operably coupled to the conduit to move the cooling fluid at least partially through the electromagnetic machine 20.

An electromagnetic machine 20 having a heat transfer component 40 with one or more helical or spiral channels for receiving a cooling fluid in one or more directions provides enhanced cooling for stator back iron designs that have a high pressure drop and/or high temperature differential. Further, formation of the heat transfer component 40 formed from aluminum reduces cost, provides corrosion resistant and easier manufacturability with tightly controlled tolerances.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope hereof.

## Claims

1. An electromagnetic machine comprising:
a stator (30);
a heat transfer component (40) thermally coupled to the stator (30), the heat transfer component (40) having at least one inlet (52), at least one outlet (54), and one or more channels (44) fluidly connecting the at least one inlet (52) to the at least one outlet (54), the one or more channels (44) having a spiral-like configuration.

2. The electromagnetic machine of claim 1, wherein the one or more channels (44) includes a first channel (44a) and a second channel (44b), the first channel (44a) being positioned directly adjacent to the second channel (44b).

3. The electromagnetic machine of claim 2, wherein both the first channel (44a) and the second channel (44b) wrap about the periphery of the heat transfer component (40) together.

4. The electromagnetic machine of claim 1, wherein the at least one outlet (54) includes a plurality of outlets, and the one or more channels (44) includes a plurality of channels fluidly connecting the at least one inlet (52) to the plurality of outlets.

5. The electromagnetic machine of claim 4, wherein a first channel (44a) of the plurality of channels extends axially from the at least one inlet to a first outlet of the plurality of outlets in a first direction and a second channel (44b) of the plurality of channels extends axially from the at least one inlet to a second outlet of the plurality of outlets in a second direction, and preferably wherein the first channel (44a) is wrapped about a periphery of the heat transfer component (40) in a first wrap direction and the second channel (44b) is wrapped about a periphery of the heat transfer component (40) in a second, opposite wrap direction.

6. The electromagnetic machine of claim 4, wherein a first channel (44a) and a second channel (44b) of the plurality of channels extend axially from the at least one inlet to a first outlet of the plurality of outlets in a first direction and a third channel and a fourth channel of the plurality of channels extend axially from the at least one inlet to a second outlet of the plurality of outlets in a second direction.

7. The electromagnetic machine of claim 1, wherein the at least one inlet (52) and the at least one outlet (54) are axially offset.

8. The electromagnetic machine of claim 1, wherein the at least one inlet (52) further comprises a plurality of inlets including a first inlet arranged near a first end of the heat transfer component (40), a second inlet arranged near a center of the heat transfer component (40), and a third inlet arranged near a second, opposite end of the heat transfer component (40), and preferably wherein the at least one outlet (54) further comprises a plurality of outlets including a first outlet and a second outlet, and more preferably wherein the one or more channels (44) includes a plurality of channels, the first outlet is fluidly connected to the first inlet by at least one of the plurality of channels, the first outlet is fluidly connected to the second inlet by at least one of the plurality of channels, the second outlet is fluidly connected to the second inlet by at least one channel of the plurality of channels, and the second outlet is fluidly connected to the third inlet by at least one channel of the plurality of channels.

9. The electromagnetic machine of claim 1, wherein the one or more channels (44) is formed as a groove in a surface of the heat transfer component (40).

10. The electromagnetic machine of any preceding claim, wherein the heat transfer component (40) further comprises a base (42) and a plurality of fins (50), the one or more channels (40) being defined by the plurality of fins (50).

11. The electromagnetic machine of any preceding claim, further comprising a housing (28), wherein an interior surface of the housing cooperates with the heat transfer component (40) to bound the one or more channels (44).

12. The electromagnetic machine of any preceding claim, wherein the heat transfer component (40) is formed from an aluminum material or alloy.

13. A method of cooling a stator comprising:
providing a heat transfer component thermally coupled to the stator, the heat transfer component having at least one inlet, at least one outlet, and one or more channels fluidly connecting the at least one inlet to the at least one outlet, the one or more channels having a helical configuration;
providing a cooling fluid to the at least one inlet; and
removing heat from the stator via the cooling fluid.

14. The method of claim 13, wherein the at least one inlet further comprises a plurality of inlets, the cooling fluid is provided to the plurality of inlets simultaneously.

15. The method of claim 14, wherein the one or more channels further comprises a plurality of channels, and the cooling fluid is configured to flow through at least one of the plurality of channels in a first axial direction and the cooling fluid is configured to flow through at least one of the plurality of channels in a second axial direction; and/or
wherein the cooling fluid is configured to flow about a periphery of the heat transfer component in a first wrap direction and the cooling fluid is configured to flow about the periphery of the heat transfer component in a second wrap direction.
